(19) Europäisches Patentamt
European Patent Office
Office européen des brevets

(11) **EP 3 236 618 A1**

(12) **EUROPÄISCHE PATENTANMELDUNG**

(43) Veröffentlichungstag:
**25.10.2017 Patentblatt 2017/43**

(51) Int Cl.:
*H04L 12/24* [(2006.01)] *H04L 12/26* [(2006.01)]

(21) Anmeldenummer: **17153529.7**

(22) Anmeldetag: **27.01.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **20.04.2016 DE 102016206707**

(71) Anmelder: **Siemens Aktiengesellschaft**
**80333 München (DE)**

(72) Erfinder: **Siegel, Tobias**
**90475 Nürnberg (DE)**

(54) **DIAGNOSEVERFAHREN UND DIAGNOSEVORRICHTUNG FÜR EIN NETZWERK**

(57) Die Erfindung betrifft ein Diagnoseverfahren für ein Netzwerk, wobei das Netzwerk zumindest ein Netzwerkgerät enthält wobei das Netzwerkgerät mit dem Netzwerk verbunden wird, wobei das Netzwerkgerät einen Betriebsstundenzähler, der Zeitinformationen zur Betriebsdauer ausgibt, aufweist und wobei das Netzwerkgerät nach einem Verbindungsausfall zu einem Verbindungsausfallzeitpunkt mit dem Netzwerk erneut mit dem Netzwerk verbunden wird, umfassend die Schritte:

- Ermittlung der Betriebsdauerzeit des Betriebsstundenzählers,
- Ermittlung der Verbindungsausfallzeit,
- Ermittlung des Verbindungsausfallsgrunds anhand eines Vergleichs (2) zwischen der Betriebsdauerzeit und der Verbindungsausfallzeit.

Zudem betrifft die Erfindung eine Diagnosevorrichtung für ein Netzwerk.

**Beschreibung**

Die Erfindung betrifft ein Diagnoseverfahren für ein Netzwerk, wobei das Netzwerk zumindest ein Netzwerkgerät enthält, und wobei das Netzwerkgerät mit dem Netzwerk verbunden wird, und wobei das Netzwerkgerät einen Betriebsstundenzähler, der Zeitinformationen zur Betriebsdauer ausgibt, aufweist und wobei das Netzwerkgerät nach einem Verbindungsausfall mit dem Netzwerk zu einem Verbindungsausfallzeitpunkt mit dem Netzwerk erneut mit dem Netzwerk verbunden wird. Zudem betrifft die Erfindung eine Diagnosevorrichtung.

Kommunikationsnetzwerke finden immer breitere Anwendung zum Messen, Steuern und Regeln komplexer technischer Systeme. Eine Standard-Netzwerkumgebung, die weit verbreitet ist, basiert auf dem Ethernet-Protokoll. Die Verwendung von Ethernet-Infrastrukturen hat den Vorteil, dass standardisierte Netzwerkeinrichtungen und Verfahren zum Einsatz kommen können.

Wenn bei einer Anforderung von Teilnehmern Verbindungen fehlerhaft nicht hergestellt werden, ergibt sich ein beträchtlicher Einkommensverlust für den jeweiligen Netzbetreiber. Solche Ausfälle ergeben sich üblicherweise aufgrund von Fehlern des Netzwerkes oder des Netzwerkgerätes selbst, beispielsweise Kopplern, Netzwerksteuerpunkten, Signalübertragungspunkten oder ähnlichen Elementen.

Gegenwärtige Überwachungsverfahren mit Hilfe von Wartungsoperationen stellen Fehler fest und isolieren sie, indem sie einfach nur das Auftreten eines Fehlers notieren und das fehlerhafte Netzwerkelement identifizieren. Zusätzlich zur Durchführung einer solchen Fehlerfeststellung und -isolierung bei tatsächlichen Verbindungsfehlern können Prüfverbindungen eingeleitet werden, um eine zusätzliche Fehleranalyse zu veranlassen. Das Netzwerkelement muss dann beispielsweise abgefragt werden.

Demgemäß lässt sich eine genaue Analyse hinsichtlich der Art und des Grundes für den Fehler - die zugrunde liegende Ursache des Fehlers - während einer längeren Zeitdauer nicht gewinnen.

Netzwerke nach IEEE802 basieren auf einer aktiven Switching-Technology, d.h. empfangene Telegramme werden eingelesen und auf dem zu sendenden Port aktiv identisch neu erzeugt. Für das Switchen werden unterschiedliche Mechanismen genutzt, z.B. Cut-Through, Store and forward, uvm.. Ein Switching ist nur möglich, wenn der integrierte Switch der Netzwerkgeräte mit Energie versorgt ist.

Ob die Störungen am Netzwerk selber oder am Gerät liegen, aufgrund von den Systemeigenschaften des Ethernets nach IEEE802, kann nicht unterschieden werden. Die zuvor genannten Störungen werden durch eine Unterbrechung der Kommunikation und einem Geräteausfall gemeldet.

Bisher wurde bei fehlender Verbindung des Netzwerkgerätes zu dem Netzwerk eine manuelle Sichtprüfung der Verkabelung oder eine manuelle gerätespezifische Prüfung der Geräte zur Behebung der Störung durchgeführt.

Aus der DE112008000225T5 ist eine Netzwerküberwachung mit Kontrollsystem bekannt. Dabei wird ein Verfahren beschrieben zur Überwachung eines industriellen Kontrollsystems mit einem Anlagennetzwerk, ein Client/Server-Netzwerk für eine Serververbindung mit Arbeitsplätzen und ein Kontrollnetzwerksystem das mit industriellen Kontrollvorrichtungen verbunden ist. Dabei werden Prozessinformationen und Netzwerkinformation erfasst. Weiterhin findet ein Vergleichen von Information statt, die von einer Datenkommunikationsnetzwerküberwachung zur Verfügung gestellt wird. Das Ergebnis des Vergleichs wird verwendet, um bei der Bestimmung einer Ursache eines Problems oder möglichen Problems in einem Prozess zu unterstützen, der von dem industriellen Kontrollsystem kontrolliert wird. Die Informationen werden in Echtzeit erfasst.

Die US5347524A stellt einen Protokollanalysator zur Verfügung. Dieser wird an einem geeigneten Punkt in dem Netzwerk befestigt. Er erfasst und analysiert Pakete, um eine Liste der Protokolldateneinheiten zu erzeugen, die für das überwachte Protokoll (im Allgemeinen ein niedrigstufiges, zum Beispiel Verbindungsebenenprotokoll) relevant sind. Durch Überprüfen dieser Liste kann der Betreiber die Natur des Verkehrs an dem Punkt sehen und verschiedene Arten von Fehlern erkennen.

Die DE69734310T2 offenbart ein Verbindungsfehlererkennungsverfahren und -anordnung zum effizienten Erfassen und Lokalisieren von Störungen in einem paketvermittelten Netzwerk. Ein effizientes paketvermitteltes Netzwerk erfordert zuverlässige elektrische Verbindungen zwischen den Knoten in dem Netzwerk. Netzwerkfehler (Störungen) können auftreten, wenn die Leiter (beispielsweise ein Draht), die die Knoten in einem Netzwerk physikalisch verknüpfen, entweder in einem anhaftenden (stuck-at) oder offenen Zustand sind. Ein Leiter ist in einem anhaftenden Zustand, wenn die Kopplungsverknüpfung fehlerhafterweise auf einen spezifischen Spannungspegel gezogen oder geschoben wird. Somit haftet der Leiter an dem gezogenen oder geschobenen Pegel ohne Rücksicht auf den Pegel des an der physikalischen Verknüpfung angelegten Signals. Ein offener Zustand bedeutet, dass die Verknüpfung nicht mit dem Signal gekoppelt ist, sondern stattdessen kein Signal befördert und somit auf einem unbestimmten Spannungspegel schwebt. Sowohl die anhaftenden und offenen Zustände in einer elektrischen Verknüpfung verursachen Störungszustände in einem paketvermittelten Netzwerk.

Die DE69734310T2 verwendet weiterhin ein Statusnachrichtenbasiertes Verknüpfungssteuerprotokoll, um den Datenfluss zu steuern. In Übereinstimmung mit diesem Protokoll werden Statusnachrichten zwischen benachbarten Knoten gesendet, um dem Sendeknoten Pufferverfügbarkeit in dem Empfangsknoten mitzuteilen. Es wird ein Fehlerprüfcodeabschnitt für jeden Statusnachrichtenabschnitt erzeugt. Insbesondere erzeugt ein erster Knoten einen Statusnachrichtenabschnitt und einen entsprechenden Fehlerprüfcodeabschnitt. Der Statusnachrichtenabschnitt wird von dem ersten Knoten zu einem zweiten benachbarten Knoten mit einer Verknüpfung gesendet. Der Fehlerprüfcodeabschnitt wird ebenfalls von dem ersten Knoten zu dem zweiten Knoten mit der gleichen Verknüpfung gesendet, die verwendet wurde, um den Statusnachrichtenabschnitt zu senden.

Es ist daher eine Aufgabe der Erfindung ein Diagnoseverfahren und eine Diagnosevorrichtung anzugeben, welche auf eine sehr einfache Art und Weise die Ursache für gemeldete Störungen in einem Netzwerk angibt.

Die auf das Verfahren bezogene Aufgabe wird gelöst durch die Angabe eines Diagnoseverfahrens für ein Netzwerk, wobei das Netzwerk zumindest ein Netzwerkgerät enthält, und wobei das Netzwerkgerät mit dem Netzwerk verbunden wird, wobei das Netzwerkgerät einen Betriebsstundenzähler, der Zeitinformationen zur Betriebsdauer ausgibt, aufweist und wobei das Netzwerkgerät nach einem Verbindungsausfall mit dem Netzwerk zu einem Verbindungsausfallzeitpunkt mit dem Netzwerk erneut verbunden wird, umfassend der Schritte:

- Ermittlung der Betriebsdauerzeit des Betriebsstundenzählers,
- Ermittlung der Verbindungsausfallzeit,
- Ermittlung des Verbindungsausfallsgrunds anhand eines Vergleichs zwischen der Betriebsdauerzeit und der Verbindungsausfallzeit.

Die auf die Vorrichtung bezogene Aufgabe wird gelöst durch die Angabe einer Diagnosevorrichtung für ein Netzwerk, wobei das Netzwerk zumindest ein Netzwerkgerät enthält, wobei das Netzwerkgerät mit dem Netzwerk verbunden ist, wobei das Netzwerkgerät einen Betriebsstundenzähler, der Zeitinformationen zur Betriebsdauer ausgibt, aufweist, und wobei das Netzwerkgerät nach einem Verbindungsausfall mit dem Netzwerk zu einem Verbindungsausfallzeitpunkt erneut mit dem Netzwerk verbunden ist, wobei eine Betriebsdauerzeit des Betriebsstundenzähler und eine Verbindungsausfallzeit vorgesehen sind. Anhand eines Vergleichs zwischen der Betriebsdauerzeit und der Verbindungsausfallzeit ist nun der Verbindungsausfallsgrund ermittelbar.

Dabei ist ein Betriebsstundenzähler (Betriebszeitzähler) eine Messeinrichtung, die dazu vorgesehen ist, die Zeit zu summieren, die ein Gerät, bspw. eine elektronische Einheit, in Betrieb ist. Als Betriebsstunden werden üblicherweise beispielsweise die Dauer in Stunden angegeben, die eine technische Anlage zwischen zwei Wartungen in Betrieb bleiben kann, ohne mit schwerwiegenden Schäden wie dem Ausfall von Komponenten, Baugruppen oder Subsystemen aufgrund von Abnutzung oder Verschleiß rechnen zu müssen. Die Betriebsdauerzeit ist daher als Zeit seit dem letzten Hochlauf des Geräts zu sehen.

Erfindungsgemäß beruht das Diagnoseverfahren als auch die Diagnosevorrichtung auf der Restart-Analyse von Netzwerkgeräten. Durch das manuelle oder automatische Abfragen der Betriebsdauerzeit des Betriebsstundenzählers und der Verbindungsausfallzeit sowie des anschließenden Vergleichs kann eine detaillierte Aussage über die Ursache des Fehlers ermittelt werden.

Durch dieses erfindungsgemäße Vorgehen können vorhandene Informationen verwendet werden, um beispielsweise in ethernetbasierenden Netzwerken nach IEEE802 eine verbesserte Diagnose zu ermöglichen.

In den Unteransprüchen sind weitere vorteilhafte Maßnahmen aufgelistet, die beliebig miteinander kombiniert werden können, um weitere Vorteile zu erzielen.

Bevorzugt werden zudem folgende Schritte durchgeführt:

- Ermittlung einer Abfragezeit des Betriebsstundenzählers,
- Ermittlung eines Verbindungsausfallzeitpunkts,
- Ermittlung eines ersten Differenzwertes als Verbindungsausfallzeit durch Bildung der Differenz zwischen der Abfragezeit des Betriebsstundenzählers und dem Verbindungsausfallzeitpunkt.

Diese Werte können, z.B. über Standardmechanismen mit dem Netzwerkverwaltungsprotokoll SNMP, Simple Network Management Protocol nach RFC 1157 und RFC 3410, ermittelt werden.

In einer besonderen Ausgestaltung wird der Vergleich mit einem Diagnosewert wahr bewertet, wenn die Betriebsdauerzeit kleiner oder gleich als die Verbindungsausfallzeit ist und mit einem Diagnosewert falsch, wenn die Betriebsdauerzeit größer als die Verbindungsausfallzeit ist.

Bei einem Diagnosewert wahr ist der Verbindungsausfallsgrund das Netzwerkgerät. In einer bevorzugten Ausgestaltung kann dies ein Neustart des Netzwerkgerätes und/oder ein Spannungsausfall des Netzwerkgerätes sein.

Bei einem Diagnosewert falsch kann der Verbindungsausfallsgrund also ein Netzwerkfehler sein.

Alternativ kann der Vergleich als ein zweiter Differenzwert ausgebildet sein. Dabei wird der zweite Differenzwert bevorzugt durch Subtraktion der Betriebsdauerzeit und des ersten Differenzwertes gebildet. Bei einem Nullwert oder negativen zweiten Differenzwert ist der Verbindungsausfallsgrund bevorzugt das Netzwerkgerät. Der Verbindungsausfallsgrund kann z.B. durch einen Neustart des Netzwerkgerätes und/oder ein Spannungsausfall des Netzwerkgerätes bewerkstelligt worden sein.

Bei einem positiven zweiten Differenzwert ist bevorzugt der Verbindungsausfallsgrund ein Netzwerkfehler.

In einer bevorzugten Ausgestaltung kann die Abfragezeit des Betriebsstundenzählers als aktuelle Zeit des fehlermeldenden Netzwerkgerätes ausgestaltet sein. Diese kann leicht ermittelt werden.

In einer weiteren bevorzugten Ausgestaltung kann die Verbindungsausfallzeit über das fehlermeldende Netzwerkgerät signalisiert werden. Dabei kann das fehlermeldende Netzwerkgerät auch als Softwaretool ausgebildet sein.

Die Diagnosevorrichtung eignet sich insbesondere für die Durchführung des erfindungsgemäßen Diagnoseverfahrens.

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch:

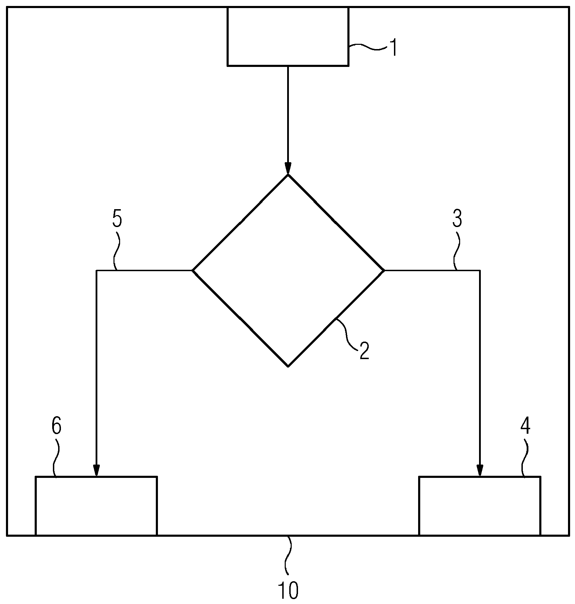

FIG 1: schematisch das erfindungsgemäße Diagnoseverfahren in einer erfindungsgemäßen Diagnosevorrichtung.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Störungen wie Netzwerkfehler oder Netzwerkgeräteausfall werden durch eine Unterbrechung der Kommunikation gemeldet. Bisher wird durch eine manuelle Sichtprüfung der Verkabelung oder durch eine manuelle gerätespezifische Prüfung der Geräte die Ursache ermittelt.

Erfindungsgemäß wird dieses Problem nun durch eine Restart-Analyse des Netzwerkgeräts gelöst. Nachdem das Netzwerkgerät erneut kommunikationstechnisch verfügbar ist, d. h. im Netz sichtbar ist, wird der Betriebsstundenzähler des Netzwerkgeräts überprüft und Betriebsdauerzeit des Betriebsstundenzählers als auch die Verbindungsausfallzeit ermittelt. Dabei ist die Verbindungsausfallzeit die Differenz von der Abfragezeit des Betriebsstundenzählers abzüglich des Verbindungsausfallzeitpunkts. Diese Werte können, z.B. über Standardmechanismen mit dem Netzwerkverwaltungsprotokoll wie SNMP, Simple Network Management Protocol nach RFC 1157 und RFC 3410, ermittelt werden.

Die Betriebsdauerzeit des Betriebsstundenzählers kann beispielsweise über "SysUpTime" des RFC 1213 ermittelt werden. Dabei definieren verschiedene RFCs verschiedene MIB-Module. Dabei ist ein Management Information Base eine Beschreibung, die Definitionen von Management-Informationen enthält, die dazu benutzt werden können, ein an ein Netzwerk angeschlossenes Gerät von ferne zu überwachen, zu konfigurieren und steuern.

Die Abfragezeit des Betriebsstundenzählers ist die aktuelle Zeit des fehlermeldenden Netzwerkgeräts. Dabei kann das Netzwerkgerät auch ein Softwaretool sein.

Der Verbindungsausfallzeitpunkt d.h. die Ausfallzeit des Netzwerkgeräts wird über das fehlermeldende Gerät bzw. Softwaretool signalisiert.

Nun wird eine Abfrage gestartet:

- Wenn die "Betriebsdauerzeit" größer als die "Verbindungsausfallzeit" ist, dann ist die Ausfallursache ein Netzwerkfehler.

- Wenn die "Betriebsdauerzeit" kleiner oder gleich der "Ausfallzeit des Geräts" ist, dann ist die Ausfallursache ein Netzwerkgeräteneustart/Netzwerkgeräteausfall oder ein Spannungsausfall des Netzwerkgeräts.

In FIG 1 ist nun die Störung 1 von einem Netzwerkgerät zum Netzwerk gegeben, d.h. das Netzwerkgerät ist nicht mehr im Netzwerk sichtbar. Nach dem Ermitteln der Betriebsdauerzeit und der Verbindungsausfallzeit durch den Verbindungsausfallzeitpunkt sowie der Abfragezeit des Betriebsstundenzählers wird nun ein Vergleich 2 durchgeführt und ein Diagnosewert ermittelt. Ist der Diagnosewert wahr 3, z.B. kann er durch "1" gekennzeichnet sein. Somit ist ein Geräteneustart oder ein Spannungsausfall 4 am Gerät für die Störung 1 verantwortlich. Bei einem Diagnosewert falsch 5 wäre ein Netzwerkfehler 6 verantwortlich. Dabei kann der Diagnosewert falsch 5 auch durch eine "0" gekennzeichnet sein. Das oben beschriebene Diagnoseverfahren kann in einer Diagnosevorrichtung 10 angeordnet sein.

Nachfolgend soll ein anschauliches Beispiel gegeben werden.

Ein Netzwerkgerät fällt um 12:00 Uhr aus und ist anschließend wieder verfügbar. Um 12:15 wird die Betriebsdauerzeit von "10min" ermittelt. Der Verbindungsausfallzeitpunkt ist 12:00 Uhr. Die Abfragezeit des Betriebsstundenzählers ist hingegen 12:15 Uhr.

Anschließend wird der Vergleich

```
Betriebsdauerzeit < (Abfragezeit des Betriebsstundenzählers
- Verbindungsausfallzeit)
```

durchgeführt: hier

```
10 min < 12:15 Uhr - 12:00 Uhr?
10 min < 15 min
```

und ein Diagnosewert von "wahr 3" ermittelt.

Daraus ergibt sich, dass die Ursache für die Störung 1 ein Geräteneustart oder Spannungsausfall 4 am Gerät ist.

Durch diesen Algorithmus können vorhandene, einfach zu ermittelnde Informationen verwendet werden, um in z.B. ethernetbasierenden Netzwerken nach IEEE802 eine verbesserte Diagnose zu ermöglichen.

**Patentansprüche**

1. Diagnoseverfahren für ein Netzwerk, wobei das Netzwerk zumindest ein Netzwerkgerät enthält, und wobei das Netzwerkgerät mit dem Netzwerk verbunden wird, wobei das Netzwerkgerät einen Betriebsstundenzähler, der Zeitinformationen zur Betriebsdauer ausgibt, aufweist und wobei das Netzwerkgerät nach einem Verbindungsausfall mit dem Netzwerk zu einem Verbindungsausfallzeitpunkt erneut mit dem Netzwerk verbunden wird, **gekennzeichnet durch** die Schritte:

   - Ermittlung der Betriebsdauerzeit des Betriebsstundenzählers,
   - Ermittlung der Verbindungsausfallzeit,
   - Ermittlung des Verbindungsausfallsgrunds anhand eines Vergleichs (2) zwischen der Betriebsdauerzeit und der Verbindungsausfallzeit.

2. Diagnoseverfahren für ein Netzwerk nach Anspruch 1, **gekennzeichnet durch** weitere folgende Schritte:

   - Ermittlung einer Abfragezeit des Betriebsstundenzählers,
   - Ermittlung eines Verbindungsausfallzeitpunkts,
   - Ermittlung eines ersten Differenzwertes als Verbindungsausfallzeit **durch** Bildung der Differenz zwischen der Abfragezeit des Betriebsstundenzählers und dem Verbindungsausfallzeitpunkt.

3. Diagnoseverfahren für ein Netzwerk nach Anspruch 1 oder 2, **gekennzeichnet, durch** bewerten des Vergleichs (2) mit einem Diagnosewert wahr (3), wenn die Betriebsdauerzeit kleiner oder gleich als die Verbindungsausfallzeit ist, und mit einem Diagnosewert falsch (5), wenn die Betriebsdauerzeit größer als die Verbindungsausfallzeit ist.

4. Diagnoseverfahren für ein Netzwerk nach Anspruch 3, **dadurch gekennzeichnet, dass** bei einem Diagnosewert wahr (3) der Verbindungsausfallgrund das Netzwerkgerät ist.

5. Diagnoseverfahren für ein Netzwerk nach Anspruch 4 **dadurch gekennzeichnet, dass** der Verbindungsausfallsgrund als ein Neustart des Netzwerkgerätes und/oder ein Spannungsausfall des Netzwerkgerätes (4) ausgebildet wird.

6. Diagnoseverfahren für ein Netzwerk nach einem der Ansprüche 3-5, **dadurch gekennzeichnet, dass** bei einem Diagnosewert falsch (5) der Verbindungsausfallsgrund als ein Netzwerkfehler (6) ausgebildet wird.

7. Diagnoseverfahren für ein Netzwerk nach Anspruch 2, **dadurch gekennzeichnet, dass** der Vergleich als ein zweiter Differenzwert ausgebildet wird.

8. Diagnoseverfahren für ein Netzwerk nach Anspruch 7,

**dadurch gekennzeichnet, dass** der zweite Differenzwert durch Subtraktion der Betriebsdauerzeit und des ersten Differenzwertes gebildet wird.

9. Diagnoseverfahren für ein Netzwerk nach Anspruch 8,
**dadurch gekennzeichnet, dass** bei einem Nullwert oder negativen zweiten Differenzwert der Verbindungsausfallsgrund das Netzwerkgerät ist.

10. Diagnoseverfahren für ein Netzwerk nach Anspruch 9,
**dadurch gekennzeichnet, dass** der Verbindungsausfallgrund als ein Neustart des Netzwerkgerätes und/oder ein Spannungsausfall des Netzwerkgerätes ausgebildet wird.

11. Diagnoseverfahren für ein Netzwerk nach einem der vorhergehenden Ansprüche 8-10,
**dadurch gekennzeichnet, dass** bei einem positiven zweiten Differenzwert der Verbindungsausfallsgrund als ein Netzwerkfehler ausgebildet wird.

12. Diagnoseverfahren für ein Netzwerk nach einem der vorhergehenden Ansprüche,
**dadurch gekennzeichnet, dass** die Abfragezeit des Betriebsstundenzählers als aktuelle Zeit des fehlermeldenden Netzwerkgerätes ausgestaltet wird.

13. Diagnoseverfahren für ein Netzwerk nach einem der vorhergehenden Ansprüche,
**dadurch gekennzeichnet, dass** die Verbindungsausfallzeit über das fehlermeldende Netzwerkgerät signalisiert wird.

14. Diagnosevorrichtung (10) für ein Netzwerk, wobei das Netzwerk zumindest ein Netzwerkgerät enthält, und wobei das Netzwerkgerät mit dem Netzwerk verbunden ist, und wobei das Netzwerkgerät einen Betriebsstundenzähler, der Zeitinformationen zur Betriebsdauer ausgibt, aufweist und wobei das Netzwerkgerät nach einem Verbindungsausfall mit dem Netzwerk zu einem Verbindungsausfallzeitpunkt erneut mit dem Netzwerk verbunden ist,
**dadurch gekennzeichnet, dass** eine Betriebsdauerzeit des Betriebsstundenzähler und eine Verbindungsausfallzeit vorgesehen sind und anhand eines Vergleichs zwischen der Betriebsdauerzeit und der Verbindungsausfallzeit der Verbindungsausfallsgrund ermittelbar ist.

15. Diagnosevorrichtung (10) für ein Netzwerk nach Anspruch 14,
**dadurch gekennzeichnet, dass** die Verbindungsausfallzeit durch eine Ermittlung einer Abfragezeit des Betriebsstundenzählers, eine Ermittlung eines Verbindungsausfallzeitpunkt und eine Ermittlung eines ersten Differenzwertes als Verbindungsausfallzeit durch Bildung der Differenz zwischen der Abfragezeit des Betriebsstundenzählers und dem Verbindungsausfallzeitpunkt bestimmbar ist.

16. Diagnosevorrichtung (10) für ein Netzwerk nach Anspruch 15,
**dadurch gekennzeichnet, dass** der Vergleich mit einem Diagnosewert wahr (3) bewertbar ist, wenn die Betriebsdauerzeit kleiner oder gleich als der erste Differenzwert ist und mit einem Diagnosewert falsch (5), wenn die Betriebsdauerzeit größer als der erste Differenzwert ist.

17. Diagnosevorrichtung (10) für ein Netzwerk nach Anspruch 16,
**dadurch gekennzeichnet, dass** bei einem Diagnosewert wahr (3) der Verbindungsausfallgrund das Netzwerkgerät ist und bei einem Diagnosewert falsch (5) der Verbindungsausfallgrund ein Netzwerkfehler (6) ist.

18. Diagnosevorrichtung (10) für ein Netzwerk nach Anspruch 15,
**dadurch gekennzeichnet, dass** der Vergleich als ein zweiter Differenzwert ausgebildet ist, welcher durch Subtraktion der Betriebsdauerzeit und des ersten Differenzwertes bestimmbar ist.

19. Diagnosevorrichtung (10) für ein Netzwerk nach Anspruch 18,
**dadurch gekennzeichnet, dass** bei einem Nullwert oder negativen zweiten Differenzwert der Verbindungsausfallsgrund das Netzwerkgerät ist und bei einem positiven zweiten Differenzwert der Verbindungsausfallgrund ein Netzwerkfehler ist.

20. Diagnosevorrichtung (10) für ein Netzwerk nach einem der vorhergehenden Ansprüche 14-19,
**dadurch gekennzeichnet, dass** die Abfragezeit des Betriebsstundenzählers die aktuelle Zeit des fehlermeldenden Netzwerkgerätes ist.

21. Diagnosevorrichtung für ein Netzwerk nach einem der vorhergehenden Ansprüche 14-20,
**dadurch gekennzeichnet, dass** die Verbindungsausfallzeit über das fehlermeldende Netzwerkgerät signalisierbar ist.

Europäisches Patentamt
European Patent Office
Office européen des brevets

# EUROPÄISCHER RECHERCHENBERICHT

Nummer der Anmeldung

EP 17 15 3529

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2004/255022 A1 (MENON SUNIL [US]) 16. Dezember 2004 (2004-12-16)<br><br>* Absätze [0011], [0024] - [0025], [0029] *<br>* Abbildungen 1C,2,3 *<br>----- | 1-8, 12-18, 20,21 | INV.<br>H04L12/24<br>H04L12/26 |
| Y | EP 1 525 713 A2 (CISCO TECH IND [US]) 27. April 2005 (2005-04-27)<br><br>* Absätze [0041] - [0043], [0055] - [0057] *<br>* Abbildungen 4A,4B,6,8,9 *<br>----- | 1-8, 12-18, 20,21 | |
| A,D | CASE J ET AL: "RFC 1157 - A Simple Network Management Protocol", INTERNET CITATION, Mai 1990 (1990-05), Seiten 1-37, XP002312268, Gefunden im Internet: URL:http://tools.ietf.org/html/rfc1157 [gefunden am 2010-07-02] * chapter 4.1.6 *<br>----- | 1-21 | |
| | | | RECHERCHIERTE SACHGEBIETE (IPC)<br><br>H04L |
| A | AUDRIS MOCKUS: "Empirical estimates of software availability of deployed systems", EMPIRICAL SOFTWARE ENGINEERING, ACM, 2 PENN PLAZA, SUITE 701 NEW YORK NY 10121-0701 USA, 21. September 2006 (2006-09-21), Seiten 222-231, XP058318658, DOI: 10.1145/1159733.1159767 ISBN: 978-1-59593-218-1 * chapter 5, page 224 - chapter 9, page 231 *<br>----- | 1-21 | |

Der vorliegende Recherchenbericht wurde für alle Patentansprüche erstellt

| Recherchenort | Abschlußdatum der Recherche | Prüfer |
|---|---|---|
| München | 27. Juli 2017 | Bertsch, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 15 3529

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-07-2017

| Im Recherchenbericht angeführtes Patentdokument | Datum der Veröffentlichung | Mitglied(er) der Patentfamilie | Datum der Veröffentlichung |
|---|---|---|---|
| US 2004255022 A1 | 16-12-2004 | GB 2403374 A<br>US 2004255022 A1 | 29-12-2004<br>16-12-2004 |
| EP 1525713 A2 | 27-04-2005 | AU 2003257943 A1<br>CA 2493525 A1<br>CA 2783206 A1<br>CN 1672362 A<br>EP 1525713 A2<br>US 2004024865 A1<br>US 2007028147 A1<br>WO 2004012395 A2 | 16-02-2004<br>05-02-2004<br>05-02-2004<br>21-09-2005<br>27-04-2005<br>05-02-2004<br>01-02-2007<br>05-02-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112008000225 T5
- US 5347524 A
- DE 69734310 T2